# EUROPEAN PATENT APPLICATION

(11) **EP 1 757 897 A1**
(43) Date of publication of application: **28.02.2007**
(21) Application number: 05730652.4
(22) Date of filing: 15.04.2005
(51) Int. Cl.: F42B 3/12, B60R 21/26, B60R 22/46, C06C 7/00, C06D 5/00

(54) **IGNITER AND GAS GENERATOR HAVING THE SAME**

(30) Priority: 16.04.2004 JP 2004121453
(71) Applicant: NIPPON KAYAKU KABUSHIKI KAISHA, Tokyo 102-8172 (JP)
(72) Inventor: MATSUMURA, Yasushi, c/o Himeji Factory, Himeji-shi, Hyogo 679-2123 (JP); MARUYAMA, Junya, c/o Himeji Factory, Himeji-shi, Hyogo 679-2123 (JP); HIRONAKA, Akitoshi, c/o Himeji Factory, Himeji-shi, Hyogo 679-2123 (JP); KURITA, Kazumasa, c/o Himeji Factory, Himeji-shi, Hyogo 679-2123 (JP); IKEDA, Kenjiro, c/o Himeji Factory, Himeji-shi, Hyoogo 679-2123 (JP)
(74) Representative: Dronne, Guy
(86) International application number: PCT/JP2005/007333
(87) International publication number: WO 2005/100905

(57) **Abstract**

Provided is a squib for attaining a normal ignition of gas generants even when an adhesion state of the plug with enhancers is released by vibration or impact and a gas generator having the squib. A squib including a plug 13, two or more electrode pins 14 which pass through the plug 13 and respectively provided with a head 25, a bridge wire 16 connecting spaces between the respective heads 25 on at least two electrode pins 14 among the electrode pins 14, and ignition charge 10 which are ignited by the bridge wire 16 electrified via the electrode pins 14, wherein the plug 13 is a cured composition of thermosetting resins, the electrode pin 14 in which the bridge wire 16 is connected to the head 25 passes through the plug 13, with a predetermined distance A kept between the head 25 and the plug 13, and at least the head 25 and the bridge wire 16 are enclosed by the ignition charge 10, which is a solid, and fixed to the plug 13.

## Description

### Technical Field

The present invention relates to a squib used in a gas generator actuating occupant restraint system such as a seat belt pretensioner and an airbag of automobiles and a gas generator having the squib.

### Background Art

Restraints for protecting passengers during an automobile collision include seat belt pretensioners and airbags. These pretensioners and airbags are actuated by a large quantity of gas supplied from a gas generator to protect passengers. Further, the gas generator is provided with a squib, gas generants and the like, allowing gas generants to ignite and burn by flames (high-temperature gas and particles) generated by the squib upon collision, thereby instantly generating a large quantity of gas.

An example of the squib used in the gas generator is a squib used in the gas generator illustrated in Fig. 14 of Patent Document 1. The squib is provided with two electrode pins 20 and 21 which pass through a header (plug) 100. Each of these electrode pins 20 and 21 is provided with a head on the leading end and placed on the header (plug) 100 in such a way that the head is in contact with the surface of a bridge wire 30 in the header (plug) 100. Then, each of the electrode pins 20 and 21 is connected to each of the heads electrically by the bridge wire 30. The bridge wire 30 is covered with a primer 1120. The header (plug) 100 is molded by injection molding of polybutylene ester terephthalate.

This squib is mounted on a gas generator which is not provided with an output cup 160 or an output charge 170. The gas generator needs to be low in sensitivity to electrostatic discharge by the primer 1120 and a flash charge 1050, or a base (holder) 1090 of the gas generator needs to give a spark gap at a low voltage to the electrode pins 20 and 21.

This gas generator is actuated to heat a bridge wire 30 by an electric current based on a collision signal from a collision sensor. The heated bridge wire 30 allows the primers 1120 and 1050 to ignite and burn. Then, flames generated by combustion of the primers 1120 and 1050 allow gas generants 305 to ignite and burn, and generated gas is spouted into a seat belt pretensioner, an airbag or others.

Patent Document 1: Japanese Translation of International Application (Kohyo) No. H09-504599 (Fig. 14)

### Disclosure of the Invention

### Problems to be Solved by the Invention

In the squib described in Patent Document 1, a head of an electrode pin and a header (plug) are arranged so as to be in contact with each other. Therefore, when an adhesion state of the plug with the enhancers is released by vibration or impact, a bridge wire may be broken. In this case, gas generants are more likely to have a failure in normal ignition.

The present invention has been made in view of the above problem, an object of which is to provide a squib attaining a normal ignition of gas generants even when an adhesion state of the plug with the enhancers is released by vibration or impact having the squib.

### Means for Solving the Problem and Effects of the Invention

The squib of the present invention is a squib including a plug 13, two or more electrode pins 14 which pass through the plug 13 and provided respectively with a head 25, a bridge wire 16 connecting spaces between the respective heads 25 on at least two electrode pins 14 among the electrode pins 14, and ignition charge 10 which are ignited by the bridge wire 16 electrified via the electrode pins 14, wherein the plug 13 is a cured composition of thermosetting resins, the electrode pin 14 in which the bridge wire 16 is connected to the head 25 passes through the plug 13, with a predetermined distance A kept between the head 25 and the plug 13, and at least the head 25 and the bridge wire 16 are enclosed by the ignition charge 10, which is a solid, and fixed to the plug 13.

Herein, the head 25 is that having at the head a flat surface larger in area than the cross section of a pin portion vertical to the center line.

In such a configuration, it is possible that the ignition charge 10 cover a part around the head 25 of the electrode pin 14 and the bridge wire 16. Further, the ignition charge 10 can be arranged between the head 25 of the electrode pin 14 and the plug 13. Therefore, even when an adhesion state of the plug 13 with the ignition charge 10 is released by vibration or impact, the ignition charge 10 are hooked on a part projecting toward the electrode pin 14, thereby making it less likely that the bridge wire 16 is broken. As a result, a highly reliable squib 4 is obtained, which can ignite gas generants 2 without fail. Further, since the plug 13 is not softened at high temperatures, it is possible to prevent the electrode pin 14 from being removed from the plug 13 on fire. It is, consequently, possible to make the plug 13 thin and also miniaturize the squib 4. Further, the ignition charge 10, the head 25 and the bridge wire 16 are formed integrally, thereby making it less likely that the bridge wire 16 is broken, when an adhesion state of the plug 13 with the ignition charge 10 is released by vibration or impact, resulting in a fact that a highly reliable squib 4 can be provided, which can ignite gas generants 2 without fail.

It is preferable that the squib of the present invention is provided with a flat surface 25a on which the top of the head 25 of the electrode pin 14 connected to the bridge wire 16 traverses an axial center.

In such a configuration, the head of the electrode pin can be easily jointed with the bridge wire by welding or other methods.

In the squib of the present invention, it is preferable that a predetermined distance A between the head 25 and the plug 13 is in the range from 0.1 mm to 2.0mm.

In such a configuration, it is possible to easily inhibit the movement of enhancers covering a part around the head 25 of the electrode pin 14. That is, it is less likely that an adhesion state of the plug 13 with the ignition charge 10 is released by vibration or impact. As a result, the ignition charge 10 are ignited without fail, thereby making it possible to provide a highly reliable squib 4. If a predetermined distance A between the head 25 and the plug 13 is in the above range, it is possible to change the distance A appropriately, depending on a desired quantity of the ignition charge 10.

In the squib of the present invention, it is preferable that the ignition charge 10 are a solid body and a coating layer 30 is provided on the surface of the solid body.

In such a configuration, it is possible to save a cup body usually used in a squib and reduce the number of parts. It is also possible to miniaturize the squib 4. Further, where gas generants (hereinafter referred to as smokeless powder) of nitrocellulose-based material, the surface of which is treated with graphite, are used in a gas generator 1, a high voltage is generated by static electricity and the like between a metal cup 3 housing gas generants 2 and an electrode pin 14 to discharge, thereby resulting in ignition of ignition charge 10 and causing a risk that the gas generator 1 may be actuated unexpectedly. Therefore, enhancers are made into one solid body and a coating layer 30 is provided on the surface of the solid body, thereby making it possible to decrease the risk that the gas generator 1 is actuated unexpectedly. Further, ignition charge 10 high in sensitivity to static electricity may be ignited by friction with gas generants 2 due to vibration and the like, resulting in a risk that the gas generator 1 may be actuated unexpectedly. However, the coating layer 30 is provided as described above, thereby making it possible to prevent friction derived from a direct contact of the coating layer 30 with gas generants 2 and reduce the risk. It is also possible to decrease the moisture absorption of ignition charge 10 found in manufacturing the squib 4 or during storage of the squib 4 until it is used in the gas generator 1. Further, it is possible to decrease the damage of ignition charge 10 or gas generants 2 due to vibration and the like.

In the squib of the present invention, it is preferable that the coating layer 30 is formed with a material containing at least any one of the materials selected from silicon resin, fluorine resin, acrylic resin and epoxy resin.

In such a configuration, it is possible to provide a coating layer 30 having a higher electric insulation, a lower moisture permeability and a more appropriate elasticity and to attain the above-described object more effectively.

In the squib of the present invention, the thickness (E) of the coating layer 30 is preferably in the range from 0.1 mm to 3.0mm.

in the above-constituted squib, it is possible to attain the effect of the coating layer 30 more cost-efficiently.

In the squib of the present invention, the composition of thermosetting resins is preferably a composition of epoxy resins.

In such a configuration, it is possible to utilize the characteristics of epoxy resins excellent in adhesiveness with metal. Namely, it is possible to prevent moisture from entering into a cup from an adhered surface of the electrode pin 14 with the plug 13 and to further increase the moisture resistance. Since the squib is higher in heat resistance and strength, the plug 13 can be made thinner to miniaturize the size of the squib.

The gas generator of the present invention is preferably provided with the squib 4 of the present invention.

The above-constituted gas generator 1 can miniaturize the squib 4, thereby making it possible to reduce the size of the gas generator 1 accordingly or load gas generants 2 in a quantity greater than those used in a conventional gas generator. The quantity is preferably in the range from 300mg to 3000mg. Conventionally, gas generants prepared by nitrocellulose-containing smokeless powder have been used. There is a problem that combustion of gas generants of the smokeless powder yields products rich in carbon monoxide to enter into the automobile. Gas generants which yield clean combustion products, however, tend to have difficultly in burning and the smokeless powder is needed in a greater quantity in order to provide a desired output. Since the gas generator 1 of the present invention can house gas generants 2 in a greater quantity than does a conventional gas generator, it is possible to use the gas generants 2, combustion products of which are clean.

### Best Mode for Carrying Out the Invention

Hereinafter, an explanation will be made for an embodiment covering the squib, the manufacturing method and the gas generator in the present invention by referring to the drawings.

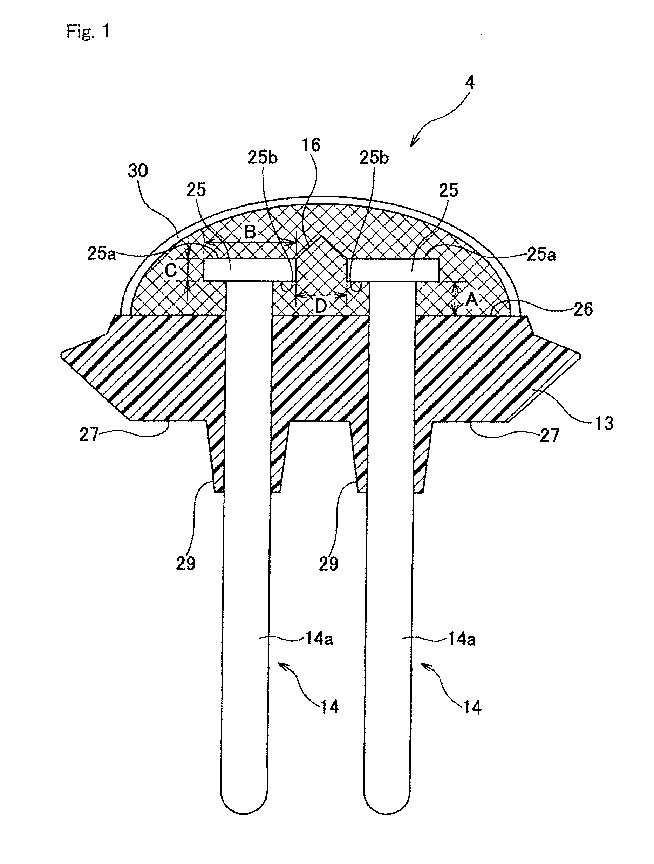

In Fig. 1, the squib 4 of the present embodiment is provided with a plug 13, two electrode pins 14 for electrification, a resistor (bridge wire) 16, ignition charge 10 and a coating layer 30 for coating the ignition charge 10.

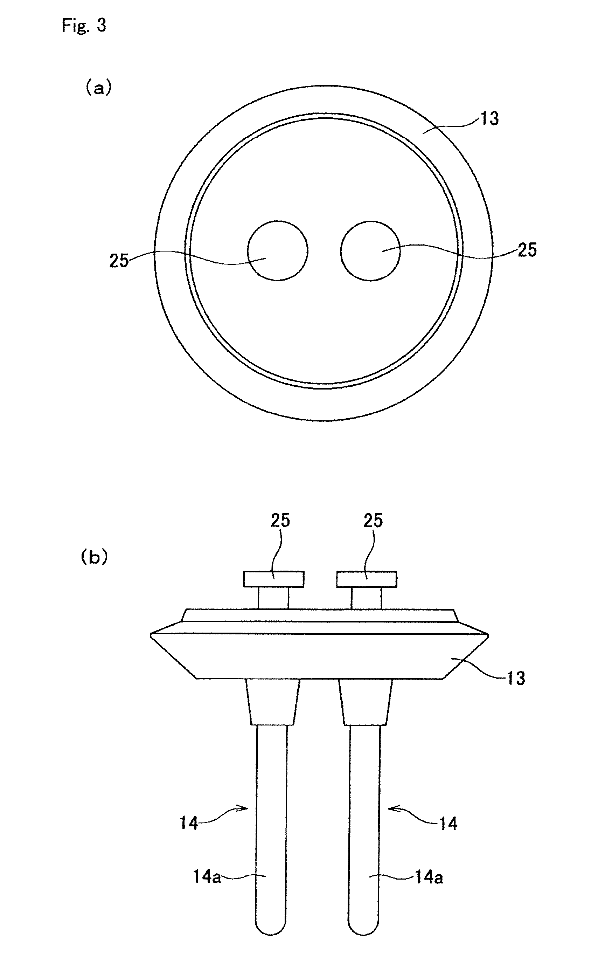

Each of the two electrode pins 14 is provided with a terminal 14a and a head 25, through a plug 13 formed with a thermosetting resin, adhered and fixed, thereby making it possible that the electrode pin 14, which passes through the plug 13 as described above, is adhered to the plug 13 and can prevent the admission of water from outside and also can prevent the electrode pin 14 from being removed from the plug 13 on fire. Further, the electrode pin 14 is made with nickel-containing alloy, iron, aluminum, copper, stainless steel or others. The head 25 is formed integrally at one end of the terminal 14a, provided with two flat surfaces 25a and 25b traversing the axial center of the terminal 14a to form a T-shape configuration with the terminal 14a (refer to Fig. 3). Additionally, the head 25 functions to prevent the electrode pin 14 from being removed from the plug 13, if the electrode pin 14 fixed to the plug 13 should be released from the plug 13 on fire.

Herein, the diameter of the head 25 is preferably larger than that of the terminal 14a. More concretely, a ratio of the sectional area of the head 25 to that of the axial portion 14a of the electrode pin 14 is preferably from 1.16:1 to 11:1, and more preferably from 1.25:1 to 9:1. Where the ratio of the sectional area of the head 25 to that of the head 14a of the electrode pin 14 is in the above range, ignition charge 10 are sufficiently filled into a space between the flat surface 25b and the surface 26 of the plug 13, thereby forming no space therebetween. As a result, the ignition charge 10 are allowed to function to the full extent, and no bridge wire 16 is broken because vibration or impact does not result in removal of the ignition charge 10 from the head 25.

Further, the height C of the head 25 is preferably in the range from C=0.1mm to 3.0mm and more preferably from C=0.5mm to 2.0mm. Where C is in the above range, the head can be formed in a stable configuration (for example, the axial cross section is of a T-shape or an L-shape configuration). The cost is also kept low, as compared with a case where the height C is outside the above range.

Still further, the shortest distance D between the heads 25 of two electrode pins 14 is preferably in the range from D=0.3mm to 3.0mm and more preferably from D=0.5mm to 1.5mm. Where D is in the above range, a bridge wire 16 can be welded to each of the heads 25 at a predetermined resistance value stably, and ignition charge 10 are allowed to function to the full extent, without forming a space for the ignition charge 10 around the bridge wire 16

In addition, where the head 25 of the electrode pin 14 is in a circular shape when viewed from a flat surface, the diameter B is preferably in the range from B=1.1mm to 2.8mm and more preferably from B=1.2mm to 2.4mm. Where B is in the above range, enhancers are sufficiently filled into a space between the flat surface 25b and the surface 26 of the plug 13, thereby forming no space therebetween. As a result, the ignition charge 10 are allowed to function to the full extent, and no bridge wire 16 is broken because vibration or impact does not result in removal of the ignition charge 10 from the head 25.

The head 25 of the electrode pin 14 is projected from one surface 26, with a predetermined distance A kept between one surface 26 of the plug 13 and the head. Herein, the distance A is preferably in the range from A=0.1mm to 2.0mm and more preferably from A=0.1mm to 0.5mm. Where A is in the above range, ignition charge 10 are sufficiently filled into a space between the flat surface 25b and the surface 26 of the plug 13, thereby forming no space between the flat surface 25b and the surface 26 of the plug 13. As a result, the ignition charge 10 are allowed to function to the full extent. Also in a case where the ignition charge 10 are coated only in a predetermined minimum quantity, there is no chance that the head 25 will be partially or entirely protruded out of the ignition charge 10. Consequently, a gas generator equipped with the squib 4 is not likely to cause to the squib 4 damage originating from the head 25 covered with ignition charge 10 and a coating layer 30 under more severe conditions exposed and can keep a stable performance.

A bridge wire 16 is electrically connected to the heads 25 of two electrode pins 14. Concretely, the bridge wire 16 is welded to a flat surface 25a, which is a top of the head 25. The top of the head 25 is provided with the flat surface 25a because of an easy joint of the head 25 of the electrode pin 14 with the bridge wire 16 by welding. Therefore, the head 25 is not needed to be flat on its entire surface but may be partially provided with a flat surface. Further, it is not necessarily needed to have a flat surface orthogonal to the axial center but may traverse the axial center at a predetermined angle.

Ignition charge 10 are arranged so as to cover heads 25 of two electrode pins 14 and a bridge wire 16 on a surface 26 of the plug 13 on the side at which the heads 25 of the electrode pins 14 are projected. The ignition charge 10 are a continuous solid body covering the head 25, a part of a terminal 14a of the electrode pin 14 projected from the plug 13 and an entire part of the bridge wire 16. Further, ignition charge 10 used in the squib 4 of the present embodiment preferably weigh in the range from 50mg to 300mg, and more preferably from 80mg to 200mg. If the ignition charge 10 weigh in the above range, it is possible to give an enhancing force to gas generants 2, as required. Further, the enhancing force will not excessively elevate the pressure at a rising part of the gas pressure. Therefore, where the gas generants are used as they are as a squib for a seat belt pretensioner and an airbag, the seat belt pretensioner and the airbag can be actuated stably. The ignition charge 10 of the present embodiment are dried under appropriate conditions by heat drying, for example, after being coated at a predetermined site by an appropriate coating method such as a dipping method or a dispenser-using method. Then, they are provided in contact with one surface 26 of the plug 13 as a solid body formed so as to enclose the head 25 of the electrode pin 14 and the bridge wire 16.

A coating layer 30 is formed on the surface of the ignition charge 10. The thickness of the coating layer 30 is preferably in the range from 0.1 mm to 3.0mm and more preferably from 0.2mm to 1.5mm. Where the thickness of the coating layer 30 is in the above range, there will be no chance of igniting the ignition charge 10 on electric discharge caused by a high voltage generated due to static electricity and the like between a metal cup 3 housing gas generants 2 and an electrode pin 14. Further, since the coating layer 30 is moisture-resistant, the ignition charge 10 will not absorb moisture to be free of deterioration. Still further, upon ignition and burning of the ignition charge 10, there will be no chance that the coating layer 30 is left after burning to inhibit the ignition of gas generants 2. Therefore, when used as a squib of seat belt pretensioners and airbags, these seat belt pretensioners and airbags can be actuated in a stable manner. The coating layer 30 is formed by a curing method appropriate for the resin concerned such as drying and heating, after being coated on the surface of enhancers by an appropriate coating method such as a dipping method and a dispenser-using method.

The squib 4 of the present embodiment is constituted in such a way that when a bridge wire 16 is electrified via an electrode pin 14, it is heated to ignite ignition charge 10 for burning.

Here, a detailed explanation will be made for ignition charge 10. The ignition charge 10 used in the present invention may be prepared by mixing oxidizing agents, reducing agents, binders and additive agents which are added as required. The ignition charge 10 contain a composition of oxidizing agents and a composition of reducing agents but do not practically contain lead compounds. Herein, the lead compounds normally include inorganic and organic compounds, lead atoms and lead as an element and the like.

A composition of oxidizing agents usable as the ignition charge 10 of the present invention includes, first, that among the known compositions free of lead compounds in the field of enhancers, preferably those containing one type or two or more types selected from a group consisting of nitrate, basic nitrate, metallic oxide, metallic hydroxide, basic carbonate, perchlorate and chlorate, and more preferably those containing one type or two or more types selected from a group consisting of, for example, copper nitrate, basic zinc nitrate, basic cobalt nitrate, basic copper nitrate, copper oxide, copper nitrate, copper hydroxide, basic copper carbonate, perchlorates (such as potassium salt and sodium salt), and chlorates (such as potassium salt and sodium salt). Further, the ignition charge 10 are preferably combinations with basic copper nitrate or those with potassium perchloride and basic copper nitrate. Since the mean particle size of the composition of oxidizing agents influences the time of igniting a squib 4, 50% of the mean particle size is preferably 20µm or lower and more preferably 10µm or lower. Further, the composition of oxidizing agents is used usually in the range from 10% to 80% by weight and preferably from 15% to 70% by weight in all compositions in the ignition charge 10, to which the present invention shall not be limited, as a matter of course. The range may be changed whenever necessary, depending on a composition of reducing agents and additive agents used.

Further, reducing agents usually include metal powders. Any metal powders may be used, as long as they can function as a reducing agent in combination with the above-described composition of oxidizing agents. Of metal powders known in the field of enhancers as a composition of reducing agents, metal powders free of lead compounds may be used, preferably those containing one type or two or more types selected from a group consisting of zirconium, aluminum, magnesium, magnalium, titanium, titanium hydride, iron, tungsten and boron, and more preferably in combination with zirconium or with zirconium and aluminum.

Further, since the mean particle size of the composition of reducing agents influences the time of igniting a squib 4, 50% of the mean particle size is preferably 10µm or lower and more preferably 5µm or lower. The composition of reducing agents is used usually in the range from 15% to 90% by weight and preferably from 20% to 80% by weight in all compositions in the ignition charge 10, to which the present invention shall not be limited, as a matter of course. The range may be changed, whenever necessary, depending on the composition of oxidizing agents and additive agents used.

Binders are added in order to be adhered and fixed to a plug 13, a bridge wire 16 and an electrode pin 14 and to prevent the breakage of ignition charge 10. The binders include, for example, nitrocellulose, carboxyl methyl cellulose, cellulose acetate, cellulose acetate butyrate, viton rubber, GAP (glycidyl azide polymer), polyvinyl acetate, silicon-based binders and copolymers of vinyl chloride with vinylisobutyl ether. Preferable are polyvinyl acetates or copolymers of vinyl chloride with vinylisobutyl ether. The binders are used usually in the range from 1 % to 20% by weight and preferably from 2% to 15% by weight in all compositions in the ignition charge 10, to which the present invention shall not be limited, as a matter of course. The range may be changed, whenever necessary, depending on a composition of base agents and a composition of reducing agents used.

A binder is selected for type and quantity, which will greatly influence the process for manufacturing the ignition charge 10 and the environmental resistance, required for a gas generator. A binder in a great quantity makes it difficult to coat and form the ignition charge 10, resulting in a failure of obtaining a desired ignition performance. In contrast, a binder in a small quantity makes it impossible for a gas generator having a squib 4 to withstand the severe environmental conditions exposed, resulting in a possible breakage of the ignition charge 10 to fail the actuation of the gas generator. Two or more types of binders may be mixed and used, in addition to a sole use of the binder.

Additive agents may be added to the ignition charge 10 used in the present invention, whenever necessary. There is no particular limitation on the use of additive agents to be used for this purpose, as long as they are used in the field of enhancers. For example, a solvent may be used as an additive agent in order to give an appropriate fluidity to the ignition charge 10 to provide coating at a predetermined site and molding. A solvent may be appropriately selected, with consideration given to compatibility with binders, drying characteristics, toxicities and others. Appropriate solvents include, for example, isoamyl acetate, butyl acetate and acetone.

A preferable combination of the ignition charge 10 used in the present invention is that in which basic copper nitrate is used in the range from 15% by weight to 70% by weight, zirconium is from 20% by weight to 80% by weight and a composition of binders is from 2% by weight to 15% by weight.

Another preferable combination of the ignition charge 10 used in the present invention is that in which zirconium, aluminum, basic copper nitrate, potassium perchloride and binders are used. A quantity of zirconium is in the range from 10% by weight or more to 60% by weight or less, and preferably from 20% by weight or more to 50% by weight or less. A quantity of aluminum is in the range from 1% by weight or more to 15% by weight or less, and preferably from 3% by weight or more to 10% by weight or less. A quantity of basic copper nitrate is in the range from 5% by weight or more to 40% by weight or less and preferably from 10% by weight or more to 30% by weight or less. A quantity of potassium perchloride is in the range from 10% by weight or more to 70% by weight or less, and preferably from 20% by weight or more to 55% by weight or less. A quantity of binders is in the range from 1% by weight or more to 20% by weight or less, preferably from 2% by weight or more to 15% by weight or less, and more preferably from 3% by weight or more to 10% by weight or less.

A plug 13 is provided with two projected portions 29 on one surface 26 and the other opposite surface 27 at which ignition charge 10 are arranged in contact with them. Each of the projected portions 29 is formed integrally with two electrode pins 14 so as to cover these two electrode pins 14 and the respective central portions. The projected portions 29 are effective in retaining the insulation characteristics, even when a holder 5 to be described later is a metal. Further, the other surface 27 of the plug 13 is covered with the holder 5 to be described later.

Thermosetting resins used in the plug 13 include, for example, epoxy resin, phenol resin, unsaturated polyester, polyurethane, polyimide, and silicon resin. In particular, epoxy resin is preferable in forming a plug used in the present invention in view of mechanical strength, heat resistance, moisture resistance, electric characteristics, adhesiveness, workability and the like. The epoxy resin is prepared by using a composition of epoxy resins to be described later and used for molding.

There is no particular limitation on the use of epoxy resins. Appropriate epoxy resins include, for example, a multi-functional epoxy resin which is a glycidyletherified product of polyphenol compounds, a multi-functional epoxy resin which is a glycidyletherified product of various novolac resins, alicyclic epoxy resin, aliphatic epoxy resin, heterocyclic epoxy resin, glycidylester-based epoxy resin, glycidylamine-based epoxy resin, and epoxy resin in which halogenated phenols are glycidylated.

Multi-functional epoxy resins which are glycidyletherified products of polyphenol compounds include, for example, phenol, cresol, bisphenol A, bisphenol F, bisphenol S, 4,4'-biphenylphenol, tetramethylbisphenol A, dimethylbisphenol A, tetramethylbisphenol F, dimethylbisphenol F, tetramethylbisphenol S, dimethylbisphenol S, tetramethyl 4,4'-biphenol, dimethyl 4,4'-biphenylphenol, 1-(4-hydroxydiphenyl)-2-[4-(1,1-bis-(4-hydroxydiphenyl)ethyl)phenyl]propane, 2,2'-methylene-bis(4-methyl-6-tert-butylphenol), 4,4'-butylidene-bis(3-methyl-6-tert-butylphenol), tris-hydroxyphenyl methane, resorcinol, hydroquinone, pyrogallol, phenols having a di-isobrovylydene structure, phenols having a fluorine structure such as 1,1-di-4-hydroxyphenylfluorene, epoxy resins which are glycidyletherified products of polyphenol compounds such as phenolic polybutadiene.

Multi-functional epoxy resins which are glycidyletherified products of various novolac resins include, for example, novolac resins based on various phenols such as phenol, cresol, ethylphenol, butylphenol, octylphenol, bisphenol A, bisphenol F, bisphenol S and naphthol; phenol novolac resins having an xylylene structure; phenol novolac resins having a dicyclopentadiene structure; phenol novolac resins having a biphenyl structure; and glycidyletherified products of various novolac resins such as phenol novolac resins having a fluorine structure.

Alicyclic epoxy resins include, for example, alicyclic epoxy resins having an aliphatic structure such as cyclohexane of 3,4-epoxycyclohexylmethyl-3', 4'-cyclohexylcaboxylate. Aliphatic epoxy resins include, for example, glycidyl ethers of polyvalent alcohols such as 1,4-butanediol, 1,6-hexanediol, polyethylene glycol, polypropylene glycol, pentaerythritol, and xylylene glycol derivatives. Heterocyclic epoxy resins include, for example, heterocyclic epoxy resins having heterocylic rings such as an isocyanuric ring and hydantoin ring.

Glycidyl ester-based epoxy resins include, for example, epoxy resins consisting of carboxylic acids such as hexahydrophthalic acid diglycidyl ester, tetrahydrophthalic acid diglycidyl ester and others. Glycidylamine-based epoxy resins include, for example, epoxy resins obtained by glycidylation of amines such as aniline, toluidine, p-phenylenediamine, m-phenylenediamine, diamino-diphenylmethane derivatives and diaminomethyl benzene derivative.

There is no particular limitation on the use of these epoxy resins. They may be appropriately selected depending on the applications, preferably bisphenol-type epoxy resin, novolac-type epoxy resin, biphenyl-type epoxy resin, naphthalene-type epoxy resin, alicyclic epoxy resin and amine-based epoxy resin. Further, these epoxy resins are appropriately selected in the view of electric insulation, adhesiveness, water resistance, mechanical strength, workability and the like, and can be used as a mixture of one type or two or more types of them.

A composition of epoxy resins used in the present invention includes the above epoxy resins, curing agents and fillers. The curing agents include, for example, acid anhydrides, amines, phenols and imidazoles.

Acid anhydrides include, for example, phthalic anhydride, trimellitic anhydride, pyromellitic anhydride, benzophenone tetracarboxylic anhydride, aromatic carboxylic anhydrides such as ethylene glycol anhydrous trimellitic acid and biphenyltetracarboxylic anhydride, aliphatic carboxylic acid anhydrides such as azelaic acid, sebacic acid, dodecandioic acid and tetrahydrophthalic anhydride, hexahydrophthalic anhydride, nadic anhydride, HET acid anhydride, alicyclic carboxylic anhydride such as hymic anhydride. Phthalic anhydrides include, for example, 4-methyl hexahydro anhydrous phthalic acid.

Amines include, for example, aromatic amines, aliphatic amines and modified amines such as diamino diphenylmethane, diamino diphenyl sulfone and diamino diphenyl ether.

Phenols include, for example, phenols having a diisopropyridine structure such as bisphenol A, tetrabrombisphenol A, bisphenol F, bisphenol S, 4,4'-biphenylphenol, 2,2'-methylene-bis(4-methyl-6-tert-butylphenol), 2,2'-methylene-bis(4-ethyl-6-tert-butylphenol), 4,4'-butylelene-bis(3-methyl-6-tert-butylphenol), 1,1,3-tris(2-methyl-4-hydroxy-5-tert-butylphenol), tris-hydroxyphenylmethane and pyrogallol; phenols having a fluorene structure such as 1,1-di-4-hydroxyphenylfluorene; polyphenol compounds such as phenolated poly butadiene; phenols; cresols; ethyl phenols; butylphenols; octyl phenols; novolac resins based on various types of phenols such as bisphenol A, brominated bisphenol A, bisphenol F, bisphenol S and naphthols; and various novolac resins such as phenol novolac resin having an xylyene structure, phenol novolac resin having a dicyclopentadiene structure and phenol novolac resin having a fluorine structure.

Imidazoles include, for example, various imidazoles such as 2-methylimidazole, 2-phenylimidazole, 2-undecyl imidazole, 2-heptadecyl imidazole, 2-phenyl-4-methylimidazole, 1-benzyl-2-phenylimidazole, 1-benzyl-2-methylimidazole, 1-cyanolethyl-2-methylimidazole, 1-cyanolethyl-2-phenylimidazale, 1-cyanolethyl-2-undecylimidazole, 2,4-diamino-6(2'-methylimidazole(1'))ethyl-s-triazine, 2,4-diamino-6(2'-undecyl imidazole(1'))ethyl-s-triazine, 2,4-diamino-6(2'-ethyl,4-methylimidazole(1'))ethyl-s-triazine, additive of 2,4-diamino-6(2'-methylimidazole(1'))ethyl-s-triazine/isocyanuric acid, additive of 2-methylimidazole/isocyanuric acid (2:3), additive of 2-phenylimidazole/isocyanuric acid, 2-phenyl-3,5-dihydroxymethylimidazole, 2-phenyl-4-hydroxymethyl-5-methyl-imidazole and 1-cyanolethyl-2-phenyl-3,5-dicyanolethoxy methylimidazole; salts of these imidazoles with polyvalent carboxylic acids such as phthalic acid, isophthalic acid, terephthalic acid, trimellitic acid, pyromellitic acid, naphthalene dicarboxylic acid, maleic acid and oxalic acid. Of these curing agents, appropriate agents are selected, depending on characteristics or workability required for an ignition squib structure. Preferable are acid anhydrides, phenol novolac resins and amines. These curing agents are used in the range from 0.3 to 2.0 with respect to an equivalent ratio of curing agents to epoxy group of epoxy resin, preferably, from 0.4 to 1.6 and more preferably from 0.5 to 1.3. Further, curing agents may be used as a mixture of two or more of them, and imidazoles may be used as a curing accelerator as well.

Curing accelerators include, for example, various imidazoles such as 2-methylimidazole, 2-phenylimidazole, 2-undecyl imidazole, 2-heptadecyl imidazole, 2-phenyl-4-methylimidazole, 1-benzyl-2-phenylimidazole, 1-benzyl-2-methylimidazole, 1-cyanolethyl-2-methylimidazole, 1-cyanolethyl-2-phenylimidazole, 1-cyanolethyl-2-undecyl imidazole, 2,4-diamino-6(2'-methylimidazole(1'))ethyl-s-triazine, 2,4-diamino-6(2'-undecyl imidazole(1'))ethyl-s-triazine, 2,4-diamino-6(2'-ethyl,4-methylimidazole(1'))ethyl-s-triazine, additive of 2,4-diamino-6(2'-methylimidazole(1'))ethyl-s-triazine/isocyanuric acid. Additive of 2-methylimidazolelisocyanuric acid (2:3), additive of 2-phenylimidazole/isocyanuric acid, 2-phenyl-3,5-dihydroxymethylimidazole, 2-phenyl-4-hydroxymethyl-5-methylimidazole, 1-cyanolethyl-2-phenyl-3,5-dicyanol ethoxy methylimidazole; salts of these imidazoles with polyvalent carboxylic acids such as phthalic acid, isophthalic acid, terephthalic acid, trimellitic acid, pyromellitic acid, naphthalene dicarboxylic acid, maleic acid and oxalic acid; amides such as dicyandiamide; diaza compounds such as 1,8-diazabicyclo (5.4.0) undecene-7 and their phenols; above polyvalent carboxylic acids or salts with phosphinic acids; ammonium salts such as tetrabutyl ammonium bromide, cetyltrimethyl ammonium bromide, trioctyl methyl ammonium bromide; phosphines such as triphenylphosphine, tetraphenyl phosphonium tetraphenyl borate; phenols such as 2,4,6-trisaminomethylphenol; amine adducts: and micro-capsulated curing accelerators in which these curing agents are micro-capsulated. Of these curing accelerators, appropriate agents are selected, depending on characteristics required for resulting transparent resin compositions such as transparency, curing speed and workability. The curing accelerators are used in the range from 0.1 % to 5% by weight with respect to epoxy resin 100% by weight and preferably in the vicinity of 1 % by weight.

Fillers to be loaded into a thermosetting resin include, for example, fused silica, crystalline silica, silicon carbide, silicon nitride, born nitride, calcium carbonate, magnesium carbonate, barium sulfate, calcium sulfate, mica, talc, clay, aluminium oxide, magnesium oxide, zirconium oxide, aluminium hydroxide, magnesium hydroxide, calcium silicate, aluminium silicate, lithium aluminium silicate, zirconium silicate, barium titanate, glass fiber, carbon fiber, molybdenum disulfide and asbestos. Preferable are fused silica, crystalline silica, calcium carbonate, aluminium oxide, aluminium hydroxide, and calcium silicate. More preferable are fused silica, crystalline silica, aluminium oxide and calcium carbonate. These fillers may be used in an appropriate quantity, depending on the required performance and workability, preferably in the range from 30% to 95% by weight with respect to all thermosetting resin compositions, more preferably from 40% to 90% by weight and particularly preferably from 50% to 90% by weight. Further, these fillers may be used in a mixture of two or more of them, in addition to single use.

For example, coloring agents, coupling agents, leveling agents and lubricants may be added, whenever necessary, to a composition of thermosetting resins.

There is no particular limitation on the use of coloring agents. They include, for example, various organic pigments such as phthalocyanine, azo, disazo, quinacridone, anthraquinone, fravanethoron, perinone, perilene, dioxazin, condensed azo, azomethine, and inorganic pigments such as titanium oxide, lead sulfate, chrome yellow, zinc yellow, chrome vermilion, ferric oxide red, cobalt purple, iron blue, ultramarine blue, carbon black, chrome green, chrome oxide and chrome cobalt green.

Coupling agents include, for example, silane-based coupling agents such as 3-glycidoxypropyl trimethoxysilane, 3-glycidoxypropylmethyl dimethoxysilane, 3-glycidoxypropylmethyl dimethoxysilane, 2-(3,4-epoxycyclohexyl)ethyl trimethoxysilane, N-(2-aminoethyl)3-aminopropylmethyl dimethoxysilane, N-(2-aminoethyl)3-aminopropylmethyl trimethoxysilane, 3-aminopropyl triethoxysilane, 3-mercapto-propyl trimethoxysilane, vinyl trimethoxysilane, N-(2-(vinyl benzylamino)ethyl)3-aminopropyl trimethoxysilane hydrochloride, 3-methacryloxypropyl trimethoxysilane, 3-chloropropylmethyl dimethoxysilane, 3-chloropropyl trimethoxysilane; titanium-based coupling agents such as isopropyl(N-ethylaminoethylamino)titanate, isopropyl triisostearoyl titanate, titanium di(dioctylpyrophosphate)oxyacetate, tetraisopropyl di(dioctylphosphate) titanate and neoalkoxy tri(p-N-(β-aminoethyl)aminophenyl)titanate; and zirconium-based or aluminum-based coupling agents such as Zr-acetylacetonate, Zr-methacrylate, Zr-propionate, neoalkoxy zirconate, neoalkoxy trisneodecanoyl zirconate, neoalkoxy tris(dodecanoyl)benzene sulfonyl zirconate, neoalkoky tris(ethylene diaminoethyl)zirconate, neoalkoxy tris(m-aminophenyl)zirconate, ammonium zirconium carbonate, Al-acetylacetonate, Al-methacrylate and Al-propionate. Preferable are silicon-based coupling agents. Coupling agents are used to provide a cured product excellent in moisture resistance and low in adhesive strength after absorption of moisture.

Leveling agents include, for example, oligomers with molecular weight from 4000 to 12000 made up of acrylates such as ethylacrylate, butylacrylate and 2-ethylhexylacrylate; epoxylated soybean fatty acid; epoxylated abiethyl alcohol; hydrogenated castor oil; and titanium-based coupling agents.

Lubricants include, for example, hydrocarbon-based lubricants such as paraffin wax, micro-wax, polyethylene wax; higher fatty acid lubricants such as lauric acid, myristic acid, palmitic acid, stearic acid, arachidic acid and behenic acid; higher fatty acid amid-based lubricants such as stearylamide, palmtylamide, oleylamide, methylene-bis stearoamide and ethylenebis stearoamide; higher fatty acid ester-based lubricants such as cured castor oil, butylstearate, ethylene glycol monostearate, pentaerythritol(mono, di, tri or tetra)stearate; alcohol-based lubricants such as cetyl alcohol, stearyl alcohol, polyethylene glycol and polyglycero; metal soaps which are metal salts of magnesium, calcium, cadmium, barium, zinc and lead such as lauric acid, myristic acid, palmitic acid, stearic acid, arachidic acid, behenic acid, recinoleic acid and naphthenic acid; and natural waxes such as carnauba wax. candelilla wax, bee wax and montan wax.

A composition of epoxy resins is prepared by mixing ingredients such as an epoxy resin, a curing agent, a filler and, if required, a curing accelerator, a coupling agent, a coloring agent and a leveling agent with the use of a blender such as Henschel mixer or Nauta mixer, where the ingredients are a solid. Then, a kneader, an extruder and a heating roll are used to mix the resultant at temperatures from 80°C to 120°C, cool and then pulverize it into a powdery form, thereby obtaining the composition of epoxy resins. In contrast, the ingredients are a liquid, and are evenly dispersed by using a planetary mixer to obtain the composition of epoxy resins. Where the thus obtained composition of epoxy resins is a solid, in general, the composition is prepared into pellets, which are then formed by a molding machine such as a low-pressure transfer press, heated at temperatures from 100°C to 200°C and allowed to cure.

A plug 13 is formed with the above-described composition of thermosetting resins, thereby making it possible that the plug 13 is not softened, which is responsible for ejection of an electrode pin 14 out of the plug 13, even at a temperature which may cause gas generants 4 to ignite spontaneously. Further, thickness of the plug 13 is sufficiently secured to keep the strength at high temperatures even though it is thin. Therefore, a gas generator 1 can increase the capacity inside a cup 3 to house gas generants 2 to be loaded in a greater quantity, without miniaturization of the gas generator or change in size. Consequently, the plug is applicable particularly to a gas generator using gas generants (green propellants) which must be loaded in a greater quantity due to a low gas generation rate although they generate carbon monoxide in a less quantity. The plug 13, which is molded integrally with an electrode pin 14 by using a thermosetting resin, or a composition of epoxy resins in particular, is excellent in adhesiveness with the electrode pin 14. It is, therefore, possible to prevent moisture as much as possible from entering into a gas generator 1 in which ignition charge 10 are housed, without using a seal member, thereby making it possible to increase the capacity for retaining the electrode pin 14. This effect is not obtained in a case where the electrode pin 14 is simply pressed into a grooved molded article made with thermoplastic resin.

Ignition charge 10 are preferably provided on the surface with a coating layer 30. Further, the thickness of the coating layer 30 is preferably in the range from 0.1 mm to 3.0mm and more preferably from 0.2mm to 1.5mm. The coating layer 30 is formed by being coated on the surface of the ignition charge 10, which is a solid, according to an appropriate coating method, for example, a dipping method or by the use of a dispenser and then subjected to an appropriate curing method such as drying and heating.

The above coating layer 30 is provided, thereby making it possible to save a cup body which is ordinarily used in a squib 4 and reduce the number of parts. The squib 4 can also be made smaller. Further, where smokeless powder, the surface of which is subjected to graphite treatment, is used as gas generants 2 for a gas generator 1 to be described later, there is a risk that ignition charge 10 are ignited to actuate the gas generator 1 unexpectedly on electric discharge caused by a high voltage due to static electricity and the like between a metal cup 3 housing gas generants 2 and an electrode pin 14. The above risk can be reduced by providing the coating layer 30. For this purpose, it is preferable that the coating layer 30 has a higher electric insulation. There is also a risk that the ignition charge 10 high in sensitivity to static electricity may ignite due to friction with the gas generants 2 resulting from vibration and the like, by which the gas generator may be actuated unexpectedly. The coating layer 30 can prevent friction resulting from direct contact with the gas generants and reduce the risk. Further, the coating layer 30 is provided, thereby making it possible to reduce the moisture absorption that occurs in manufacturing a squib 4 and using it in a gas generator. For this purpose, it is preferable that the coating layer 30 is lower in moisture permeability. Further, the coating layer 30 is provided, thereby making it possible to reduce possible damage of the ignition charge 10 and gas generants resulting from vibration and the like. For this purpose, it is preferable that the coating layer 30 has an appropriate elasticity. Materials for forming the above-described coating layer 30 include, for example, silicon resin, fluorine resin, acrylic resin and epoxy resin.

The squib 4 of the present invention is manufactured through the following processes. (1) process of forming two electrode pins 14, (2) process of forming a plug 13 integrally with the electrode pins 14, (3) process of forming a surface for welding a bridge wire 16 at the head 25 of each of the electrode pins 14, (4) process of welding the bridge wire 16 to the electrode pins 14, (5) process of coating and drying ignition charge 10 and (6) process of coating the coating layer 30 on the surface of the ignition charge 10 and drying the layer.

The squib 4 of the present invention is provided with a shorting clip 19 for shorting two electrode pins 14. The shorting clip 19 is provided for preventing an accidental actuation of the squib 4 due to static electricity and the like.

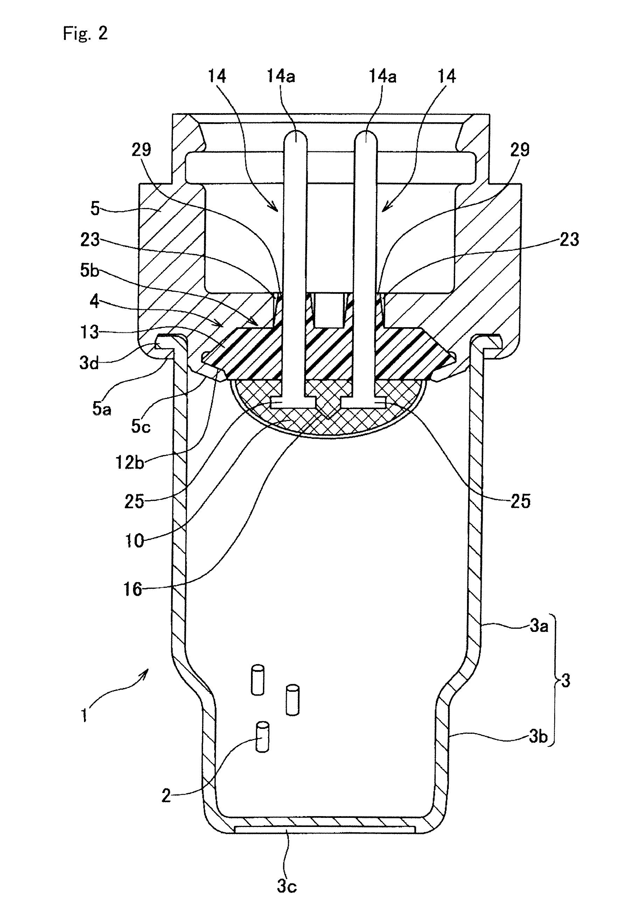

The gas generator of the present invention is provided with the above-described squib 4 and appropriately used as a gas generator for seat belt pretensioners and airbags in automobiles. One example of the gas generator in the present invention is illustrated in Fig. 2. The gas generator 1 of the present invention in Fig. 2 is a small-sized gas generator 1 constituted with a cup 3 into which gas generants 2 for generating gas through combustion are loaded, a squib 4 arranged inside the cup 3 in which ignition charge 10 are loaded and a holder 5 having an annular projection 5c for crimping and retaining a plug 13, and used in seat belt pretensioners and others. Additionally, the gas generator 1 may be modified according to necessity and used as a gas generator for an airbag equipped with the squib 4, that for raising the automotive hood and that for raising the front end of the seat.

The cup 3 is provided with a large cylindrical portion 3a and a closed-end cylindrical portion 3b having two flat side surfaces continuing to the cylindrical portion 3a and also parallel to each other. Gas generants 2 are loaded into the cup 3. Six notched portions 3c are formed radially from the center at the bottom of the closed-end cylindrical portion 3b. Then, when the gas generants 2 inside the cup 3 are burnt to generate gas high in temperature and also in pressure, the notched portions 3c are ruptured by the gas pressure and the gas is directly discharged to a seat belt pretensioner (not illustrated). A flange portion 3d to be fixed to a holder 5 to be described later is formed at the end of the opening on the cup 3. The cup 3 is made with a metal such as stainless steel, iron or aluminum, for example.

The gas generants 2 are loaded so as to be directly in contact with an inner periphery of the cup 3, rather than via a filter or coolant. The gas generants 2 usable here are preferably gas generants containing a composition of fuels, a composition of oxidizing agents and one or more types of additive agents. The composition of fuels includes one or more types selected from a group consisting of nitrogen-containing organic compounds, for example, aminotetrazole, guanidine nitrate and nitroguanidine. The composition of oxidizing agents includes one or more types selected from a group consisting of, for example, strontium nitrate, ammonium nitrate, potassium nitrate, ammonium perchloride and potassium perchloride. The additive agents include, for example, molybdenum trioxide, which is a self-ignition catalyst.

Other additive agents, which may be added to gas generants, include a binder. The binder includes, for example, one or more types selected from a group consisting of guar gum, methyl cellulose, carboxy methyl cellulose, water-soluble cellulose ether and polyethylene glycol. Preferable gas generants are those in which 5-aminotetrazole and guanidine nitrate are contained as a composition of fuels, strontium nitrate and ammonium perchloride are contained as a composition of oxidizing agents, molybdenum trioxide is contained as a self-ignition catalyst, and guar gum is contained as a binder. More preferable gas generants are those in which 5-aminotetrazole is contained in the range from 10% to 30% by weight and guanidine nitrate is from 15% to 35% by weight, as a composition of fuels, strontium nitrate is from 10% to 30% by weight and ammonium perchloride is from 15% to 35% by weight as a composition of oxidizing agents, molybdenum trioxide is from 1% to 10% by weight as a self-ignition catalyst and guar gum is from 1% to 10% by weight as a binder.

Gas generants used in the present invention may be shaped into articles having a desired configuration so as to be loaded into a seat belt pretensioner or an airbag. There is no particular limitation on the configuration of the articles. Depending on types of (a) cationic binder 0.25% to 5%, (b) anionic binder 0.25% to 5%, (c) composition of fuels, (d) oxidizing agent, (e) burning regulator and others, water or an organic solvent is added thereto to attain a uniform mixture, the mixture is then kneaded, subjected to extrusion molding, cut and shaped into cylindrical or tubular articles, or pellet-like articles by using a tableting machine and the like. The gas generants 2 are preferably used in a quantity from 300mg to 3000mg.

A holder 5 is provided with two through holes 23. An inner diameter of the through hole 23 on the holder 5 is preferably in the vicinity of 2mm. The through holes 23 are usually provided at intervals of 3.1 mm, which may vary depending on the specification of the terminal used. Portions covered with a projected portion 29 of a plug 13 among two electrode pins 14 are respectively inserted into these two through holes 23. Further, the projected portion 29 of the plug 13 is available, thereby making it possible to prevent an electrical short circuit between the pin and two through holes 23 of the holder 5 resulting from a metal burr and the like. Herein, it is preferable that the area of these two through holes 23 is sufficiently small to the extent that the electrode pin 14 can be inserted. It is preferable that the area is in the range exceeding one time the sectional area of the electrode pin 14 inserting through these through holes 23 and 10 times or less or in the range from two times to 7 times. The holder 5 is constituted as described above, by which the lower end surface of the plug 13 is supported in contact with the bottom end of the holder 5, and the sectional area of the through hole 23 into which the electrode pin 14 is inserted is made smaller than that of a conventional squib 4, thereby making it possible to prevent the electrode pin 14 from being ejected out of the holder 5. Further, the projected portion 29 is provided at the plug 13, thereby making shortest the distance between the electrode pin 14 and the holder 5 in the through hole 23. Therefore, when static electricity occurs in a static electricity test to discharge between the electrode pin 14 and the through hole 23 of the holder 5, it is possible to prevent the ignition of the ignition charge 10.

Further, a projection 5a is formed at an outer periphery of a holder 5, and the projection 5a is engaged with a flange portion 3d of a cup 3, by which the cup 3 is crimped to the holder 5. In addition, a concave housing portion 5b for housing a plug 13 and an annular projection 5c projecting right from a peripheral end of the housing portion 5b are formed at the right portion of the holder 5. In a state that the plug 13 is partially housed in the housing portion 5b, the annular projection 5c is crimped to the holder 5 so as to be in contact with a tapered portion 12b of the plug 13. The holder 5 is usually in an approximately closed-end cylindrical shape and formed with a metal material, for example, aluminum, iron or stainless steel. Since the holder needs to have the above-described through holes 23 and the like, it is preferably formed with aluminum, which can be molded easily.

As described above, the plug 13 is formed with a composition of thermosetting resins higher in strength at high temperatures. Further, the above-described ignition charge 10 are used as an ignition agent.

Next, an explanation will be made for actuation of the gas generator 1 so far described. When a collision sensor (not illustrated) detects an automobile collision, electricity is supplied via two electrode pins 14 to a bridge wire 16 connected to the electrode pins 14, thereby allowing the bridge wire 16 to heat within several milli-seconds (ms). Ignition charge 10 are ignited and burnt stably only by this heating. Flames resulting from the burning break a coating layer 30 to ignite the gas generants 2 outside the coating layer 30. A subsequent burning of the gas generants 2 generates gas inside the cup 3, thereby causing an abrupt increase in pressure inside the cup 3 to rupture notched portions 3c provided in the cup 3, directly introducing gas high in temperature and pressure into a seat belt pretensioner or an airbag (not illustrated) to actuate the seat belt pretensioner or the airbag.

The present invention is described in the above preferred embodiment but not limited thereto alone. It is easily understood that the present invention includes various embodiments which will not deviate from the spirit and scope of the invention. For example, the number of electrode pins 14 which pass through the plug 13 is given as two electrode pins in the above embodiment, to which the present invention shall not be limited. The number of the electrode pins 14, which pass through the plug 13, is preferably two but may be three or more, depending on the purpose.

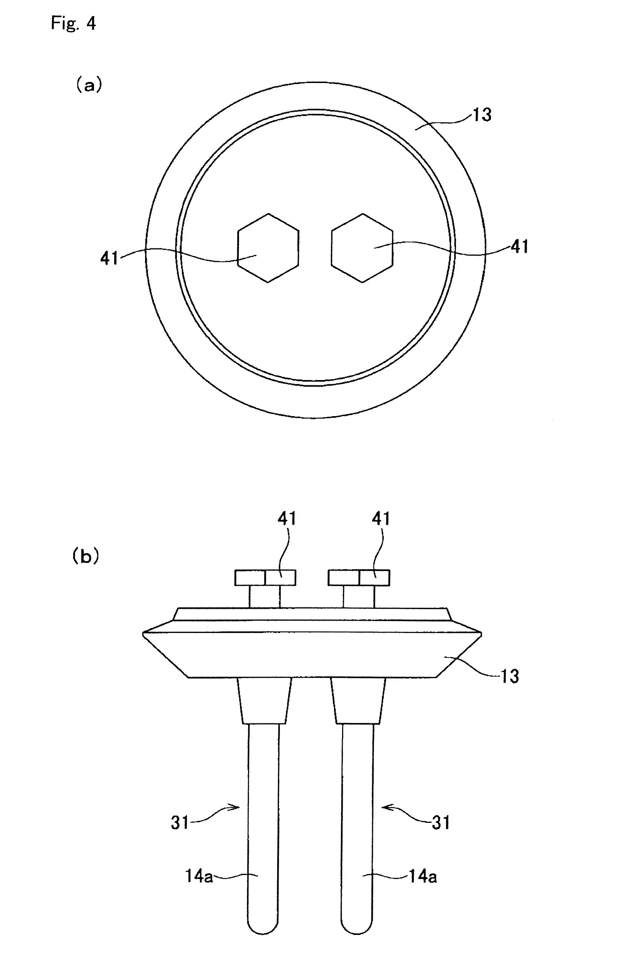

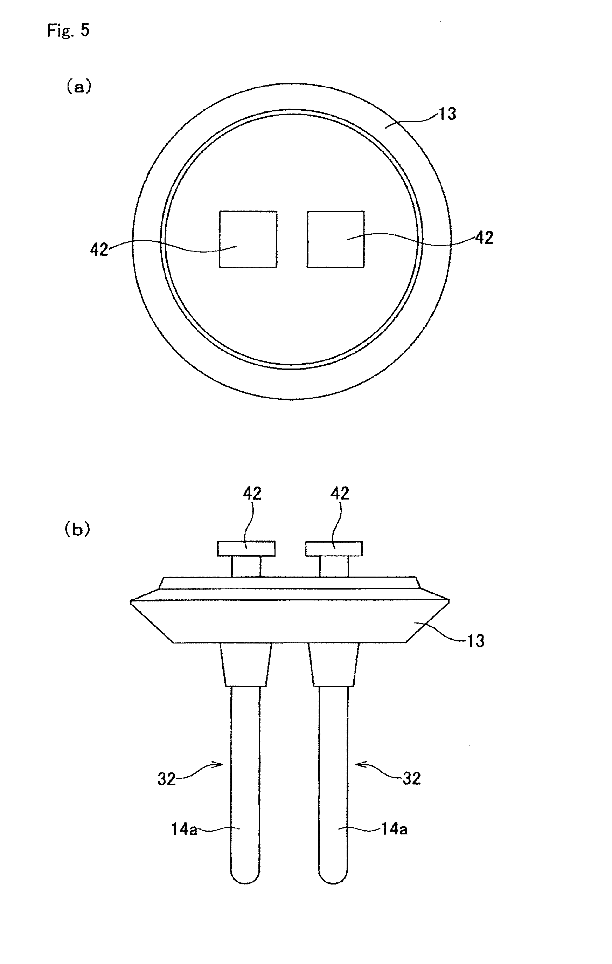

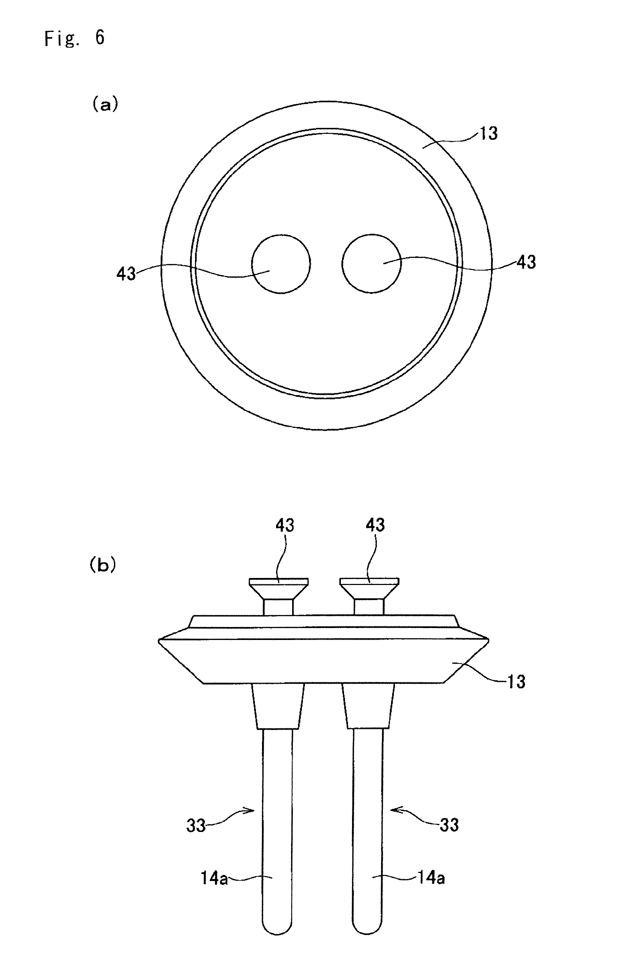

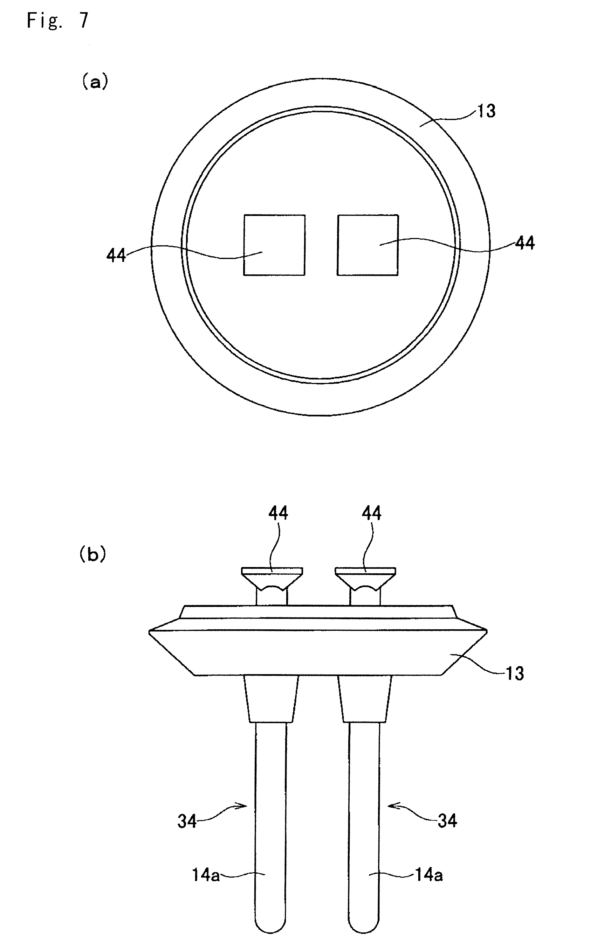

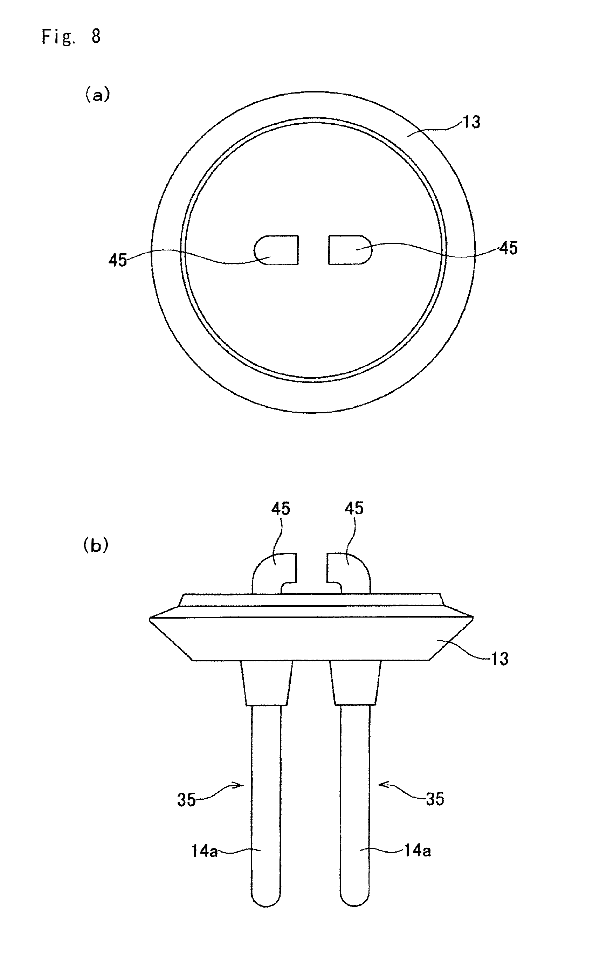

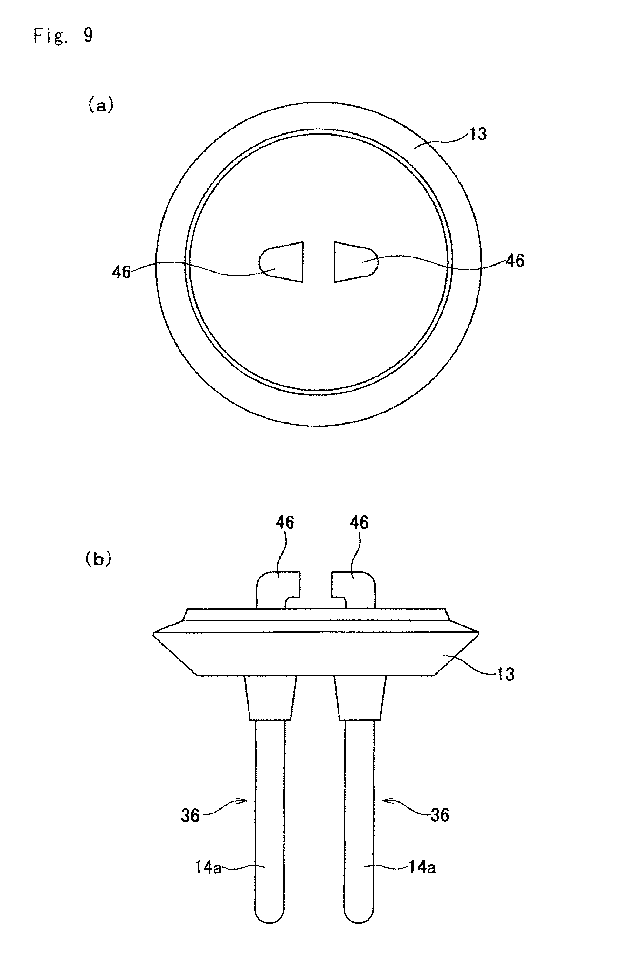

Further, in the above embodiment, the head 25 of the electrode pin 14 is put together with a terminal 14a to give a T-shape. The head is not restricted to this shape but may be available in various shapes according to the purpose. For example, shapes illustrated in Figs. 4 to Figs. 9 may be available. Herein, in Figs. 4, Fig. 4A is a plan view of a squib and Fig. 4B is a front elevational view of the squib, in which the head 41 of the electrode pin 31 is a hexagonal head. In Figs. 5, Fig. 5A is a plan view of the squib and Fig. 5B is a front elevational view of the squib, in which the head 42 of the electrode pin 32 is a square head. In Figs. 6, Fig. 6A is a plan view of the squib and Fig. 6B is a front elevational view of the squib, in which the head 43 of the electrode pin 33 is a flat head. In Figs. 7, Fig. 7A is a plan view of the squib and Fig. 7B is a front elevational view of the squib, in which the head 44 of the electrode pin 34 is a square flat head. The heads 43 and 44 illustrated in Figs. 6 and Figs. 7 are more easily attached to a terminal 14a of the electrode pin 33 than a case where the head configuration is hexagonal (refer to Figs. 4) or square (refer to Figs. 5). Further, in Figs. 8, Fig. 8A is a plan view of the squib and Fig. 8B is a front elevational view of the squib, in which the head 45 of the electrode pin 35 is formed in a claw shape. In Figs. 9, Fig. 9A is a plan view of the squib and Fig. 9B is a front elevational view of the squib, in which the head 46 of the electrode pin 36 is formed in a claw shape and also pressed from above to below on the drawing to give a flat shape. The heads 45 and 46 illustrated in Figs. 8 and Figs. 9 preclude the necessity that the electrode pins 34 and 35 are machined and fixed to the terminal 14a but only need to bend the leading end of the terminal 14a, thereby the electrode pins 34 and 35 can be easily manufactured. As described above, the heads 25 and 41 to 46 may be given any shape, as long as ignition charge 10 are prevented from being removed from the electrode pin 14 (namely, rupture of the bridge wire 16). It is more preferable that the heads can be easily jointed with the bridge wire 16 and given such a shape that the electrode pin 14 will not be easily removed from the plug 13 even if a fixed portion of the electrode pin 14 with the plug 13 is removed due to fire and the like.

Still further, in the above embodiment, the electrode pin 14 is provided at the end of the terminal 14a. However, the invention is not limited thereto and may be applicable to a case where the terminal 14a is slightly projected from the flat surface 25a at the top of the head 25.

In addition, in the above embodiment, ignition charge 10 are one continuous solid body covering a head 25, a part of a terminal 14a of the electrode pin 14 projected from the plug 13 and an entire part of a bridge wire 16, but the present invention is not limited thereto. For example, any solid body enclosing at least the head 25 and the bridge wire 16 may be less likely to have the rupture of the bridge wire 16, if adhesion of the ignition charge 10 with the plug 13 may be released by vibration and others. In such a case, the enhancers, which are not a solid body, or the enhancers, which are a solid body, may be additionally arranged around various solid bodies. It is, however, preferable that the ignition charge 10 are made up of one solid body, where a coating layer 30 is provided around the ignition charge 10.

### Brief Description of the Drawings

Fig. 1 is a cross-sectional view of a squib of an embodiment in the present invention.
Fig. 2 is a cross-sectional view of a gas generator of the embodiment in the present invention.
In Figs. 3, Fig. 3A is a plan view of a squib of the embodiment in the present invention and Fig. 3B is a front elevational view of the squib.
In Figs. 4, Fig. 4A is a plan view of a squib of the embodiment in the present invention and Fig. 4B is a front elevational view of the squib in which the head is a hexagonal head.
In Figs. 5, Fig. 5A is a plan view of a squib of the embodiment in the present invention and Fig. 5B is a front elevational view of the squid in which the head is a square head.
In Figs. 6, Fig. 6A is a plan view of a squib of the embodiment in the present invention and Fig. 6B is a front elevational view of the squib in which the head is a flat head.
In Figs. 7, Fig. 7A is a plan view of a squib of the embodiment in the present invention and Fig. 7B is a front elevational view of the squib in which the head is a square flat head.
In Figs. 8, Fig. 8A is a plan view of a squib of the embodiment in the present invention and Fig. 8B is a front elevational view of the squib in which the head is formed in a claw shape.
In Figs. 9, Fig. 9A is a plan view of a squib of the embodiment in the present invention and Fig. 9B is a front elevational view of the squib in which the head is formed in a claw shape and also pressed from above to below on the drawing to give a flat shape.

### Description of Symbols

- A:: distance between head and plug
- B:: diameter of head
- C:: height of head
- D:: shortest distance between heads of two electrode pins
- E:: thickness of coating layer
- 1:: gas generator
- 2:: gas generants
- 3:: cup
- 3a:: cylindrical portion
- 3b:: closed-end cylindrical portion
- 3c:: notched portion
- 3d:: flange portion
- 4:: squib
- 5:: holder
- 5a:: projection
- 5c:: annular projection
- 10:: enhancer
- 12b:: tapered portion
- 13:: plug
- 14:: electrode pin
- 14a:: terminal
- 16:: bridge wire
- 19:: shorting clip
- 23:: through hole
- 25:: head
- 29:: projected portion
- 30:: coating layer
- 41 to 46:: head
- 31 to 36:: electrode pin

## Claims

1. A squib comprising a plug (13), two or more electrode pins (14) which pass through the plug (13) and respectively provided with a head (25), a bridge wire (16) connecting spaces between the respective heads (25) of at least two electrode pins (14) among the electrode pins (14) and enhancers (10) which are ignited by the bridge wire (16) electrified via the electrode pins (14), wherein
the plug (13) is a cured composition of thermosetting resins,
the electrode pin (14) in which the bridge wire (16) is connected to the head (25) passes through the plug (13), with a predetermined distance (A) kept between the head (25) and the plug (13), and at least the head (25) and the bridge wire (16) are enclosed by the enhancers (10), which is a solid, and fixed to the plug (13).

2. The squib as set forth in Claim 1 wherein the top of the head (25) of the electrode pin (14) connected to the bridge wire (16) is provided with a flat surface (25a) traversing an axial center.

3. The squib as set forth in Claim 1 wherein a predetermined distance (A) between the head (25) and the plug (13) is in the range from 0.1 mm to 2.0mm.

4. The squib as set forth in Claim 1 wherein the enhancers (10) are one solid body and a coating layer (30) is provided on the surface of the solid body.

5. The squib as set forth in Claim 4 wherein the coating layer (30) is formed with a material containing at least any one of materials selected from silicon resin, fluorine resin, acrylic resin and epoxy resin.

6. The squib as set forth in Claim 4 wherein the thickness (E) of the coating layer (30) is in the range from 0.1 mm to 3.0mm.

7. The squib as set forth in Claim 1 wherein the composition of thermosetting resins is an epoxy resin composition.

8. A gas generator having the squib (4) described in any one of Claim 1 to Claim 7.
